# EUROPEAN PATENT APPLICATION

(11) **EP 0 821 873 A2**
(43) Date of publication of application: **04.02.1998**
(21) Application number: 96306310.2
(22) Date of filing: 30.08.1996
(51) Int. Cl.: A01K 87/00

(54) **Fishing rod tip**

(30) Priority: 01.08.1996 JP 220600/96
(71) Applicant: Gamakatsu Co., Ltd., Nishiwaki-shi, Hyogo (JP)
(72) Inventor: Fujii, Shigekatsu, c/o Gamakatsu Co. Ltd., Nishiwaki-shi, Hyogo (JP)
(74) Representative: Hillier, Peter

(57) **Abstract**

A fishing rod tip is provided including: a tip body 4b in the form of a hollow thin rod in which a fishing line passage 4c is defined, inner line guides 6a provided on an inner periphery of the tip body 4b, and an elongated opening 9 formed in the tip body as extending along the length thereof for providing communication between the inside and the outside of the tip body 4b.

## Description

### BACKGROUND OF THE INVENTION

### Field of the invention

The present invention relates to fishing rod tips and, more particularly, to highly improved fishing rod tips which enjoy advantages of both a tip of the external line type fishing rod in which a fishing line is guided externally and a tip of the internal line type fishing rod in which a fishing line is extended through the rod, and which hardly vibrate even in a side wind and are highly responsive to any bite.

### Description of Related Art

There have been various types of fishing rods such as jointless continuous rods and jointed rods. Such conventional rods are typically formed to be thicker at the butt section and to become thinner gradually as it goes toward the tip so that the rod bends flexibly when a tension is applied to the fishing line. Further, they are generally circular in cross section throughout the length from the butt section to the tip portion. A tip of the type having a circular cross sectional configuration has a substantially equal modulus of elasticity in any bending direction, vertical or horizontal, and hence vibrates horizontally when subjected to a side wind. Since such vibration often causes the user to mistake it for a bite, the conventional tip suffers a drawback that it is highly difficult for the user to feel a bite in a relatively strong wind.

A conventional fishing rod of the external line type is provided with outer line guides spaced along the rod from the intermediate section to the tip for guiding the fishing line therealong. The fishing rod is formed to become thinner and more flexible as it goes toward the tip and, hence the top portion of the tip will largely spring responding to the force generated by casting. The fishing line guided along the outer line guides is drawn from the tip top. If the fishing line is twisted, the line is prone to be tangled with the tip portion. Particularly where an outer fishing line guide is provided at the top portion of the tip, once the fishing line is hitched on such a guide, it tangles complicatedly and hence, it becomes very difficult to remove the line from the tip top, especially on a bad foothold such as in a surf fishing. If the fishing line tangles too complicatedly, it is often required to be cut in the middle of its length and discarded.

Further, when the fishing line is tangled with the outer line guide attached to the top portion of the tip during a long casting, an impactive tension is exerted on the tangled portion due to the weight of a sinker attached to a leading portion of the fishing line and hence, the tip of the rod may be severed at such portion or the leading portion of the line is cut off and flown away to sink in water or sea.

As described above, the external line type fishing rod using outer line guides has a problem that since the line guides protrude from the surface of the fishing rod, they hinder the removal of a fishing line once tangled with a top portion of the fishing rod. In most cases the fishing line is prone to be tangled with the top portion of the tip, and the provision of a line guide protruding at such a top portion causes an essential problem associated with the tangling of a fishing line with the fishing rod.

To solve these problems, an internal line type rod for extending the fishing line through the inside thereof has been proposed. However, a fishing rod of this type has a disadvantage that since the fishing line passes through the inside of the rod, the inner periphery of the rod, especially of the tip, has an increased area of contact with the fishing line, and the resulting contact resistance causes a decrease in the casting distance in a long casting and, hence this type of rod is not suited for a long casting as compared to a fishing rod of the external line type. Accordingly, such inner-through rods are limited to the use for a fishing which does not require a long casting such as a fishing on a boat. Further, such a internal line rod has the following problems in terms of maintenance. The inside of the rod is prone to become dirty because of water or seawater collected and stored therein. In the case of seawater, in particular, the fishing line passing through the rod may be damaged by deposited crystal of salt having acute angles. The deposited crystal of salt may eventually cause the clogging of the tip. Further, it is difficult to wash the inside of the rod satisfactorily, because there is not formed an opening sufficient to permit washing water to poured therethrough though small and insufficient openings are formed at the tip top and the butt end.

In view of the aforementioned problems essential to the prior art, it is a main object of a present invention to provide a tip which hardly vibrates even in a strong wind and is therefore sensitive even to a faint bite, which has a superior strength, and which offers a less possibility of tangling of a fishing line therewith and allows easy removal of the fishing line even if tangled.

### SUMMARY OF THE INVENTION

In accordance with a first feature of the present invention, there is provided a fishing rod tip comprising: a tip body in the form of a hollow thin rod in which a fishing line passage is defined, inner line guides provided on an inner periphery of the tip body, and an elongated opening formed in the tip body as extending along the length thereof for providing communication between the inside and the outside of the tip body.

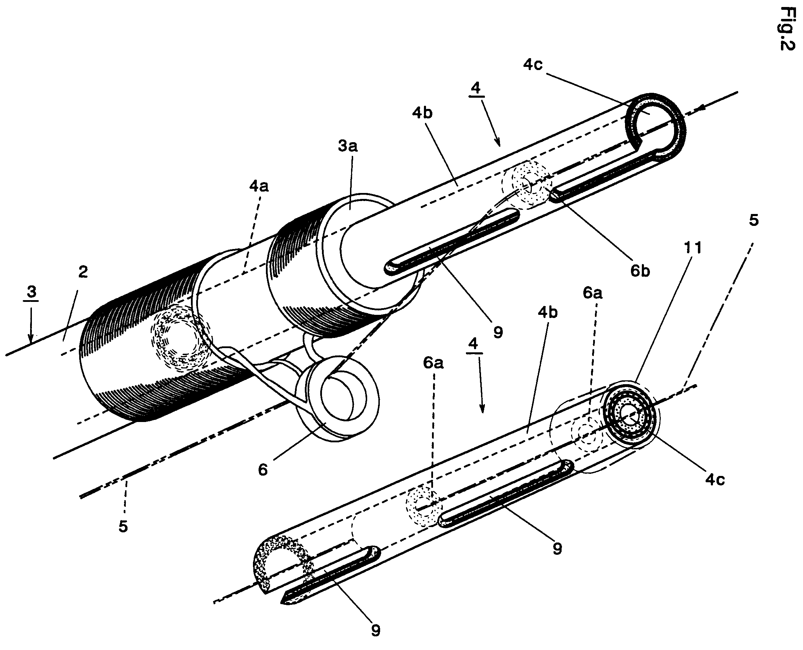

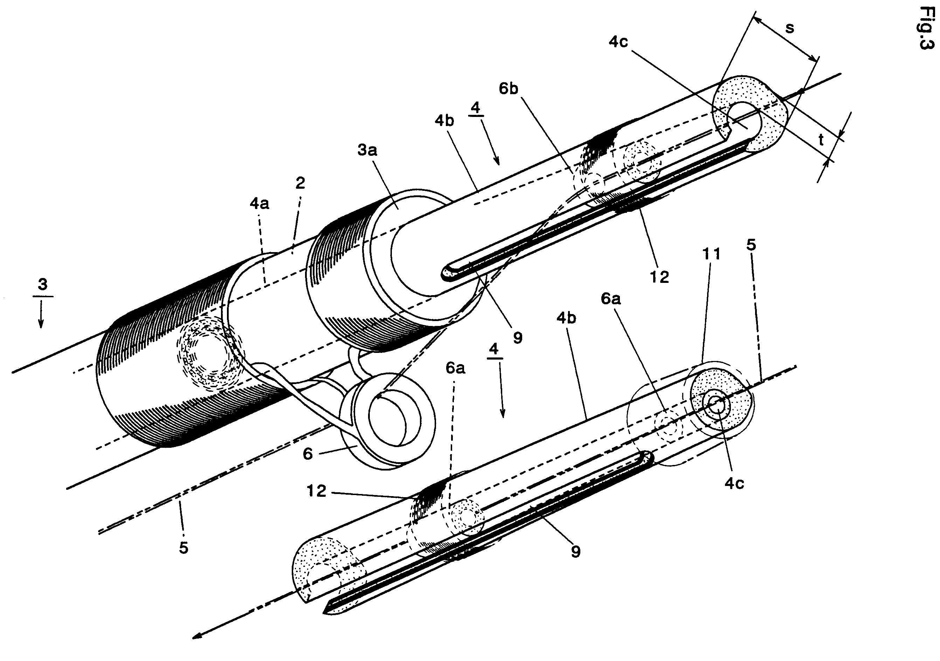

In this construction, the fishing rod tip may have a circular cross sectional configuration perpendicular to the length of the tip as shown in Fig. 2 or may have a different cross sectional configuration, for example, a substantially triangular cross sectional configuration with rounded angles in which the width of the rod tip is smaller on the side provided with the opening and larger on the opposite side as shown in Fig. 3. The present invention is not limited to such cross sectional configurations.

Since the opening is formed in the tip body along the length thereof, the tip is harder to bend in the horizontal direction than in the vertical direction and hence hardly vibrates horizontally even in a side wind. On the other hand, since the tip portion easily bends in the vertical direction, it is highly responsive to a bite.

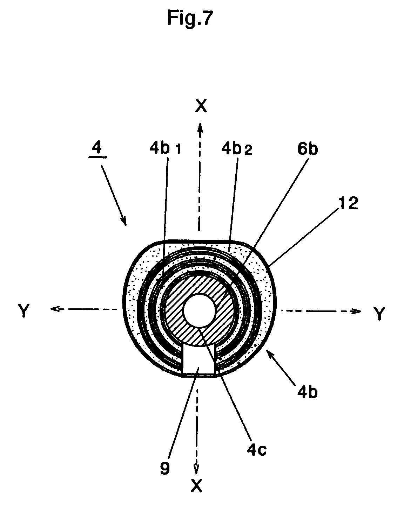

The terms "vertical direction" or "vertically" and "horizontal direction or "horizontally" as used herein are meant to indicate directions (depicted by arrow "X" in Fig. 7) perpendicular to the plane including the opening and directions (depicted by arrow "Y" in Fig. 7) perpendicular to the former directions, respectively.

Further, when the fishing line is reeled, the provision of the elongated opening extending along the length of the tip body allows water introduced into the tip together with the fishing line to be immediately drained off through the opening and, therefore the water thus introduced will not be stored in the tip. This is further advantageous in that washing of the fishing rod, especially of the tip, is carried out very easily because washing water poured from the tip top into the tip can be immediately drained off through the opening. Particularly where the opening is shaped like a groove extending along the length of the tip, the inside of the tip can be scrubbed along the opening, for example, with a brush and hence it can be washed very easily.

Moreover, the line guides do not protrude outwardly from the tip unlike the conventional external line type tip, the problem associated with the tangling of the fishing line which would otherwise occur due to the provision of outer line guides will never occur. Further, the provision of the opening along the length of the tip and the inner line guides disposed inside the tip body causes the contact resistance with the fishing line to decrease and hence, the tip can be effectively used in long casting while enjoying the advantages of the conventional internal line rod.

In accordance with a second feature of the present invention, there is provided a fishing rod tip comprising: a main tip structure in the form of a hollow thin rod having a circular configuration in cross section taken perpendicular to the length thereof in which a fishing line passage is defined, inner line guides provided on an inner periphery of the main tip structure, an elongated opening formed in the main tip structure as extending along the length thereof for providing communication between the inside and the outside of the main tip structure, and a reinforcing portion provided around the main tip structure so as not to cover at least the opening and having a greater thickness on a side opposite to the opening than on the other side having the opening.

In this construction, the main tip structure and the reinforcing portion form a tip body. By virtue of the provision of the reinforcing portion and the opening, the tip is easy to bend in the vertical direction but hard to bend in the horizontal direction and, hence the tip hardly vibrates horizontally even in a side wind while being sensitive to any bite, similarly in the case of the first feature of the present invention.

In accordance with a third feature of the present invention, there is provided a fishing rod tip comprising: a tip body in the form of a thin rod having a height (t) smaller than a width (s) in a cross section taken perpendicular to the length thereof and defining a longitudinally extending fishing line passage depressed on one wider side thereof, and inner line guides provided in the fishing line passage.

This construction also offers the advantages of: less possibility of the tangling of the fishing line with the tip, ease in removing the line even if it is tangled, ease in washing, and suitableness for long casting. In addition, the construction provides a high responsiveness to a bite because the tip has a smaller resistance against bending along the height (t) than along the width (s) and hence is hard to bend horizontally but easy to bend vertically.

In accordance with a fourth feature of the present invention, there is provided a fishing rod tip comprising: a main tip structure in the form of a thin rod having a height (t) smaller than a width (s) in a cross section taken perpendicular to the length thereof, a soft member formed integrally with the main tip structure on one wider side thereof and defining a fishing line passage therein, and inner line guides provided in the fishing line passage.

This construction also provides the advantages of: less possibility of the tangling of the fishing line with the tip, ease in removing the line even if it is tangled, ease in washing, suitableness for long casting, and a high responsiveness to a bite.

In accordance with a fifth feature of the present invention, there is provided a fishing rod tip comprising: a pair of tip-constituting rod members extending parallel from an insertion portion to be fixedly inserted into a tip holder piece toward a tip top, and inner line guides provided in a fishing line passage defined between the pair of tip-constituting rod members.

This construction also provides the advantages of: less possibility of the tangling of the fishing line with the tip, ease in removing the line even if it is tangled, ease in washing, suitableness for long casting, and a high responsiveness to a bite.

The foregoing and other objects, features and attendant advantages of the present invention will readily be appreciated from the following detailed description.

### BRIEF DESCRIPTION OF THE DRAWINGS

Fig. 1 is a front elevational view showing a fishing rod using a tip in accordance with the present invention;
Fig. 2 is a perspective view showing a tip according to a first embodiment of the present invention as viewed from below, with an intermediate portion thereof being omitted;
Fig. 3 is a perspective view showing a tip according to a first variation of the first embodiment as viewed from below, with an intermediate portion thereof being omitted;
Fig. 4 is a perspective view showing a tip according to a second variation of the first embodiment as viewed from below, with an intermediate portion thereof being omitted;

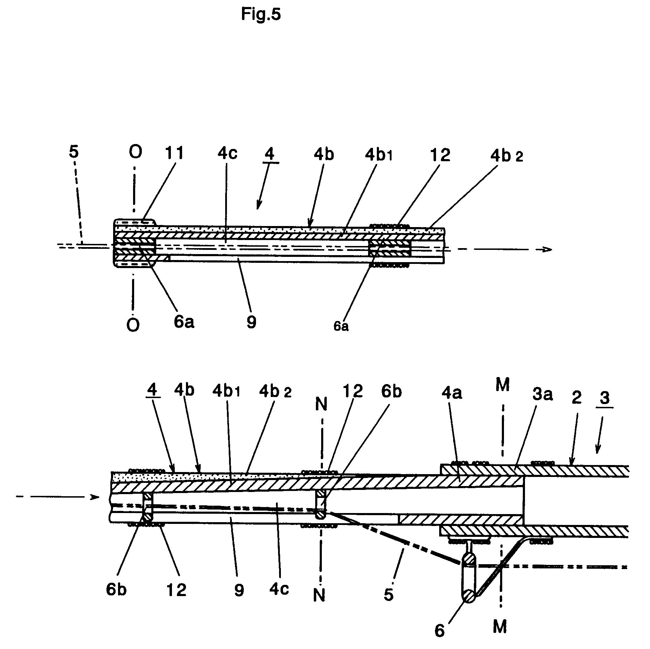

Fig. 5 is a longitudinal sectional view of the tip shown in Fig. 4, with an intermediate portion thereof being omitted;

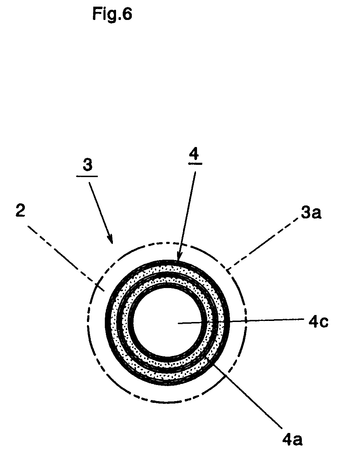

Fig. 6 is a cross sectional view of an insertion portion of the tip shown in Fig. 5 taken on line M-M;
Fig. 7 is a cross sectional view of the tip shown in Fig. 5 taken on line N-N;
Fig. 8 is a cross sectional view taken on line X-X in Fig. 7;

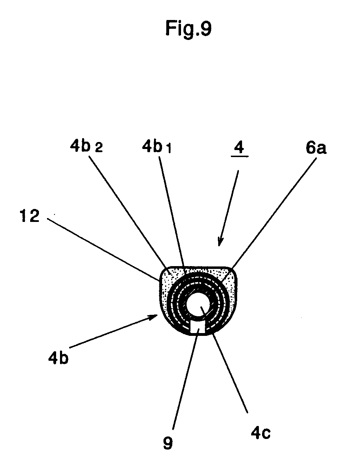

Fig. 9 is a cross sectional view of the tip shown in Fig. 5 taken on line O-O;
Fig. 10 is a sectional view of an inner line guide inserted into a tip portion of the tip of the present invention;
Fig. 11 is a perspective view showing a tip in accordance with a second embodiment of the present invention with an intermediate portion thereof being omitted;
Fig. 12 is a perspective view of a top portion of a tip according to a variation 1 of the second embodiment;
Fig. 13 is a perspective view of a top portion of a tip according to a variation 2 of the second embodiment;
Fig. 14 is a perspective view of a top portion of a tip according to a variation 3 of the second embodiment;
Fig. 15 is a perspective view of a top portion of a tip according to a variation 4 of the second embodiment;
Fig. 16 is a perspective view of a top portion of a tip according to a variation 5 of the second embodiment;
Fig. 17 is a cross sectional view of the tip according to the second embodiment;
Fig. 18 is a cross sectional view of a variation of the tip in accordance with the second embodiment;
Fig. 19 is a fragmentary perspective view of a top portion of a tip in accordance with a third embodiment of the present invention;
Fig. 20 is a reduced-scale, fragmentary plan view showing the tip of the third embodiment;
Fig. 21 is a fragmentary longitudinal sectional view of the tip of the third embodiment; and
Fig. 22 is a fragmentary longitudinal sectional view of a variation of the tip according to the third embodiment.

### DESCRIPTION OF THE PREFERRED EMBODIMENTS

The present invention will now be described in detail with reference to the attached drawings.

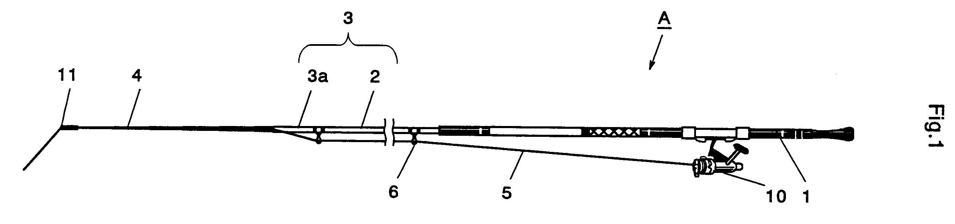

Referring to Fig. 1 showing a fishing rod A attached with a tip 4 in accordance with the present invention, the fishing rod A comprises a butt section 1, a second section, a third section, an under tip holder piece, a tip holder piece 2, and a tip 4. The portions from the second section to the tip holder piece 2 are herein generally termed "intermediate rod section 3". Outer line guides 6 are attached to the intermediate rod section 3 as protruding therefrom at appropriate positions. On the other hand, a single or plural types of inner line guides 6a are fitted within the tip 4 at appropriate positions. It should be noted that although the inner line guides are generally denoted by 6a in the specification, those of tubular shape are particularly denoted by 6b in the drawings.

Although Fig. 1 illustratively shows fishing rod A having a reel 10 attached to a lower surface of the butt section 1 and outer line guides 6 attached to a lower surface of the intermediate rod section 3 extending from the second section, this is not a limitative of the present invention; for example, a reel may be attached to an upper surface of the butt section 1 and the outer line guides 6 may be attached to an upper surface of the intermediate rod section 3.

The characteristic feature of the present invention consists in the construction of the tip 4, and the basic construction of a first embodiment is shown in Fig. 2. In accordance with the first embodiment of the present invention, the tip 4 is formed by rolling a laminated structure of carbon fiber sheets having different fiber orientations from each other into a tapered hollow shape. The hollow portion thus formed serves as a fishing line passage 4c. On an outer periphery of the tip top is mounted a reinforcing fitment 11 and at a proximal end portion of the tip is formed an insertion portion 4a which is circular in cross section for insertion fit into the distal end of the tip holder piece 2.

A plurality of openings 9 each in the form of an elongated slot extending through the peripheral wall of tip body 4b are longitudinally formed at given intervals in a surface (a lower surface in this embodiment) of the tip 4 extending from the insertion portion 4a to the tip top. The inner line guides 6a each shaped like a ring are fitted into the tip at appropriate positions in openingless portions thereof. The openings 9 may comprise a plurality of elongated slots formed in the longitudinal direction of the tip as shown in Fig. 2 or may comprise a single groove extending from the insertion portion 4a to the tip top portion as shown in Fig. 3. Alternatively, though not shown, the openings 9 may comprise a multiplicity of holes aligned straight. This holds true for other variations of the first embodiment. The openings 9 may be formed before fitting the inner line guides 6a in the tip or may be formed thereafter. In the case that the openings 9 are to be formed after the insertion of the inner line guides 6a, the openings 9 should be formed at portions provided with no inner line guide.

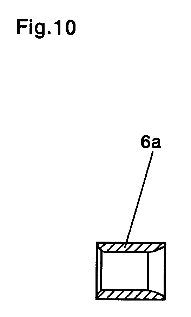

The inner line guides 6a are of two kinds in accordance with the first embodiment; those used in a thinner portion extending from an intermediate portion to a top end of the tip 4 are of thin tubular form as shown in Fig. 10 with the inner peripheral edges thereof being chamfered. With this configuration, the contact between the inner line guides and a fishing line 5 becomes a line contact and thus, the thinner portion of the tip enjoys enhanced wear resistance.

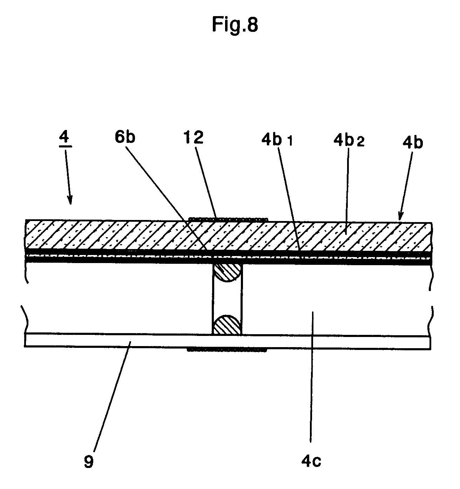

The inner line guides 6a used in a portion extending from the intermediate portion to the insertion portion 4a of the tip 4 are of a ring-like shape with its inner periphery formed into an arcuate shape as shown in Fig. 8.

The material of the inner line guides 6a is not limited to a particular one, but is preferably any one of materials capable of being highly resistant to friction with a fishing line, such as a ceramic, a superhard alloy or a material with hard chrome plating or ceramic coating in view of enhanced durability. This holds true for the first embodiment through the third embodiment.

In an exemplary process of fitting the inner line guides 6a, inner line guides 6a having gradually varying diameters are prepared and then fitted in the tip body 4b in an increasing diameter order. Since the fishing line passage 4c or the hollow portion of the tip body 4b becomes thinner toward the top end as the tip body 4b becomes thinner, each inner line guide is secured at a position where the outer diameter of the guide and the inner diameter of the tip body becomes equal to each other. Then, the inner line guides 6a may be bonded to the tip body with an adhesive, if necessary.

Thus, the inner line guides 6a are secured within the tip body 4b. In Fig. 2, the inner line guides 6a are fitted at openingless portions. In Fig. 3, they are fitted within the fishing line passage 4c or hollow portion of the tip body 4b and fixed thereto from outside by a fastening member 12 such as a fastening thread. Such a fastening member 12 is commonly provided in the first embodiment through the third embodiment, if required.

Various manners are possible for jointing the insertion portion 4a of the tip 4 with the distal end portion 3a of the tip holder piece 2, including so-called normal joint, flush joint and spigot joint, but any other jointing manner may be employed. This also holds true for the first embodiment through the third embodiment.

A first variation of the first embodiment of the tip construction in accordance with the present invention will be described with reference to Fig. 3. Herein only the portions which differ from the basic construction is to be described in detail and the description of common portions is omitted by giving like numerals. This holds true for other embodiments. The difference between the variation 1 and the basic construction consists in the tip body 4b. That is, the tip body 4b in the variation 1 is formed from a resin by injection molding or press molding using a female mold having a cavity carved into a shape conforming to the outside shape of the tip body 4b, and a male die having a ridge conforming to groove-like fishing line passage 4c to be formed in the lower surface of the tip body 4b. Examples of such resins to be typically used include those having high strength such as thermoplastic resins (e.g. nylon) and thermosetting resins (e.g. polycarbonate).

In this case, since the tip body 4b is formed by molding, only easy removal of the tip body from the mold should be considered in designing the cross sectional shape and hence, a tip body having a cross sectional configuration relatively freely designed can be prepared. In the case of Fig. 3, the tip 4 is substantially triangular with rounded angles in cross section in which the side provided with the openings 9 is narrower than the other side not provided with the openings 9. In this construction, the fishing line passage 4c is formed eccentrically toward the side provided with the openings 9, and the tip body wall is larger in thickness and width on the openingless side.

The tip 4 thus prepared has a construction in which the width (s) at the thicker wall portion of the tip body 4b is larger than the height (t) of the tip body 4b and, hence the tip is easy to bend in the vertical direction sensitively to a bite, but hardly vibrates in the horizontal direction and hardly twists.

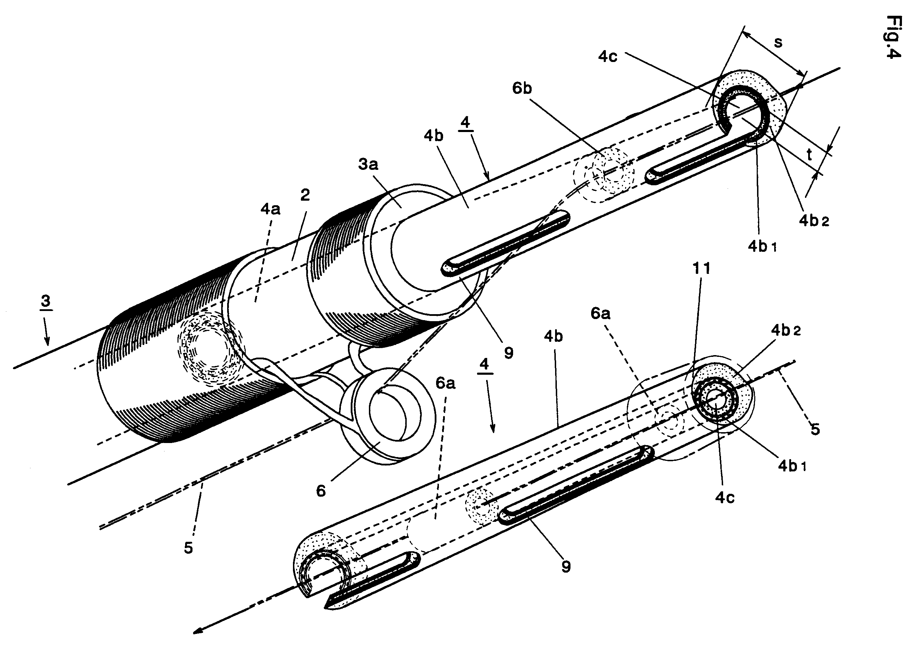

Shown in Fig. 4 is a second variation of the tip construction in accordance with the first embodiment of the present invention wherein a reinforcing portion 4b2 is provided on the outer periphery of a main tip structure 4b1. The main tip structure 4b1 corresponds to the tip body 4b of the basic construction and the cross sectional configuration thereof is identical with that of the tip body 4b of the variation 1. The reinforcing portion 4b2 is formed by placing the main tip structure 4b1 having the identical shape with the tip body 4b of the basic construction into a mold and then filling a resin into the clearance defined between the mold and the main tip structure 4b1. The reinforcing portion 4b2 is typically formed from a high strength resin such as thermoplastic resin (e.g. nylon) or thermosetting resin (e.g. polycarbonate) as used in the variation 1. In the case of using a thermoplastic resin the injection molding is generally employed, while in the case of using a thermosetting resin the press molding is generally employed. In this case, the fitting of the inner line guides 6a, formation of the reinforcing portion 4b2 and formation of the openings 9 may be carried out in any order.

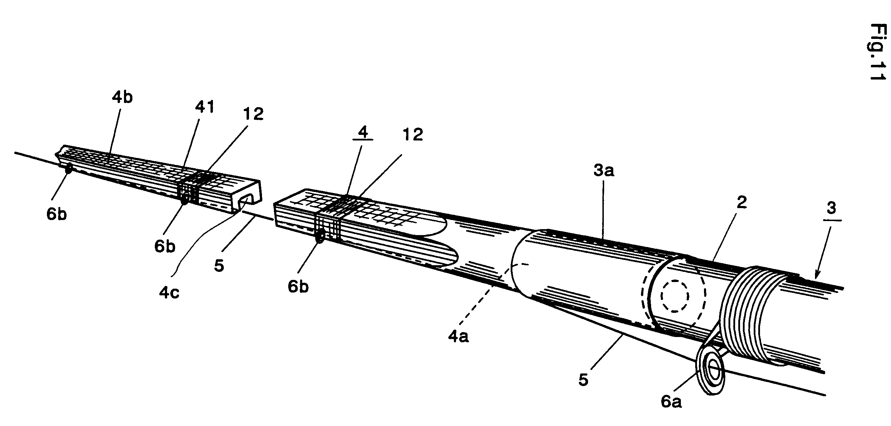

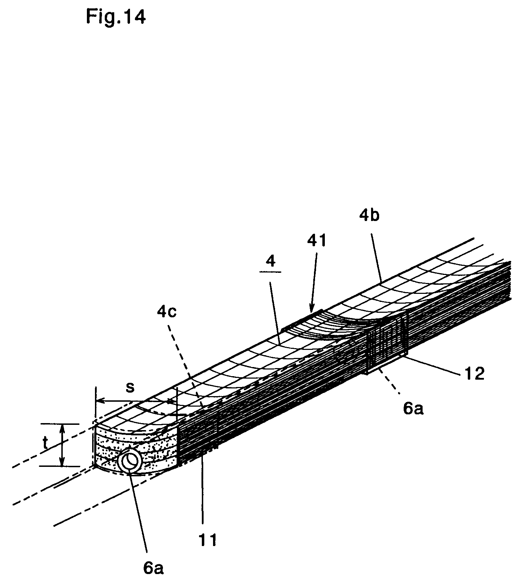

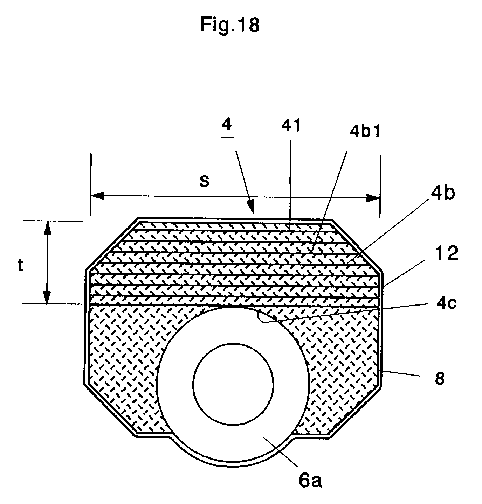

Figs. 11 through 19 illustrate a tip construction in accordance with a second embodiment and variations thereof. In accordance with a basic construction of the second embodiment shown in Fig. 11, tip 4 is formed so as to become thinner as it goes toward the tip top thereof and comprises a insertion portion 4a having a circular cross sectional configuration and a tip body 4b having a rectangular cross sectional configuration wherein a width (s) is larger than a height (t) throughout the entire length of the tip body 4b. This configuration allows the tip 4 to easily bend in the vertical direction (thicknesswise direction (t)) but to hardly bend in the horizontal direction (widthwise direction (s)). Therefore, the tip 4 hardly vibrates even in a side wind and remains stationary in a strong wind while being easy to bend vertically in response to a bite.

A fishing line passage 4c shaped like a groove is formed in a lower surface of the tip body 4b as extending over substantially the entire length of the tip body 4b up to the tip top, and inner line guides 6a are fitted in the fishing line passage 4c at appropriate positions. With this construction the tip 4 is easy to bend vertically or in the direction (t) but is difficult to bend horizontally or in the direction (s). Though the inner line guides 6a are preferably sized so as not to protrude from the fishing line passage 4a, they each may protrude therefrom by a half of their diameter at most. Even if the guides 4c protrude from the passage 4c, the protruding portions thereof are each shaped arcuate and hence do not allow tangling of the fishing line 5 therewith.

Referring to Fig. 11 showing the basic construction of the tip 4 according to the second embodiment, unlike the hollow thin rod of the first embodiment, the tip 4 is wholly formed of a laminated structure 41 of carbon fiber sheets or glass fiber sheets, and a portion of the laminated structure 41 is cut into a tip body 4b having a rectangular cross sectional configuration such that a width (s) is larger than a height (t), while another portion is cut into insertion portion 4a having a circular cross sectional configuration. The fishing line passage 4c of a groove shape is formed in a lower surface of the tip body 4b, and the inner line guides 6 are securely fitted in the fishing line passage 4c at appropriate positions.

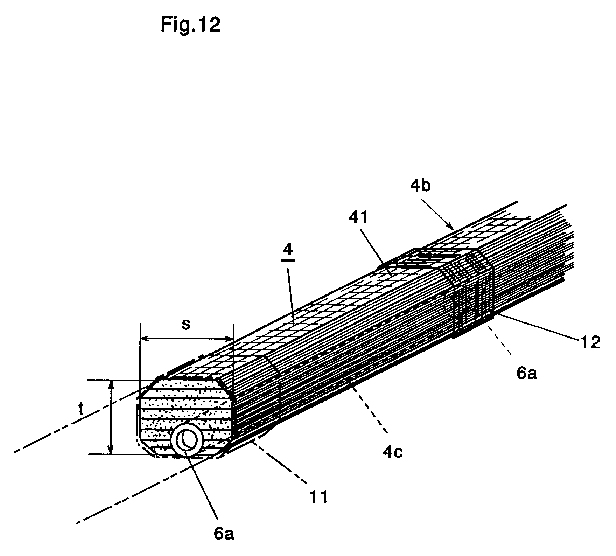

The sheets are typically laminated vertically or in the direction (t) as shown in Figs. 12 to 14, but may be laminated horizontally or in the direction (s). If the sheets are laminated in the direction (t), the resulting tip is easy to bend vertically but hard to bend horizontally, while if the sheets are laminated in the direction (s), the resulting tip is easy to bend horizontally. Accordingly, by appropriately selecting a laminating direction, it is possible to vary the hardness, flexural rigidity and flexibility of the tip 4 as desired. Additionally, fibers forming the texture of a carbon sheet material or a glass fiber sheet material are disposed so that one orientation thereof is in parallel with the length of the tip 4 and the other is in perpendicular thereto, as shown by thin lines in the drawings. They can be disposed in a bias direction in some cases. This also holds true for each of the variations of this embodiment.

Tip body 4b having a different cross sectional configuration will be described. Shown in Fig. 12 is a variation 1 of the tip 4 in accordance with the second embodiment of the present invention, in which the tip 4 is polygonal in cross section with its top and bottom sides being longer than other sides and a fishing line passage 4c is concavely formed in a lower surface of the tip, in which passage 4c inner line guides 6a are fitted.

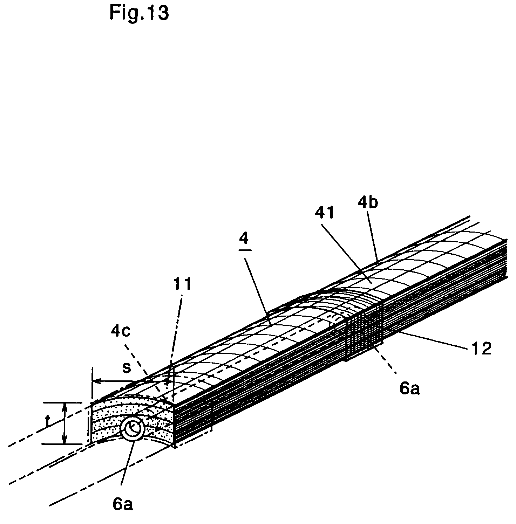

Shown in Fig. 13 is a variation 3 of the tip 4 in accordance with the second embodiment of the present invention, wherein the tip 4 is formed by laminating carbon sheet materials of an arcuate shape in cross section, or alternatively by longitudinally cutting a pipe having a relatively large diameter. Fig. 13 shows an example wherein the tip 4 is curved convexly in cross section, while Fig. 4 shows an example wherein the tip 4 is curved concavely in cross section, which is a variation 3 of the tip 4 in accordance with the second embodiment.

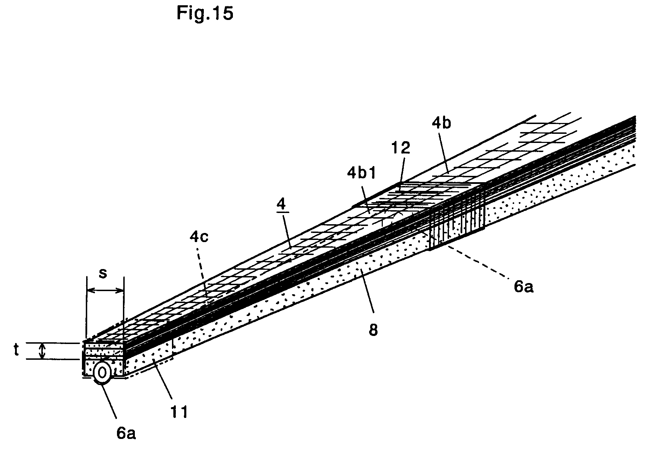

Shown in Fig. 15 is a variation 4 of the tip 4 in accordance with the second embodiment of the present invention, wherein a soft member 8 of, for example, a sponge material is disposed on a lower surface of a main tip structure 4b1 comprising a laminated structure 41 formed of carbon fiber sheets or glass fiber sheets, and a fishing line passage 4c shaped like a groove is formed as longitudinally extending centrally of a lower surface of the soft member 8 over the entire length of the soft member 8, in which passage 4c are securely inserted inner line guides 6. In this case the laminated structure 41 forming the main tip structure 4b1 is formed of carbon fiber sheets or glass fiber sheets and hence has a high flexural strength and high tenacity, while the soft member 8 defining the groove-shaped fishing line passage 4c therein is formed from, for example, a foamed urethane resin, a foamed polyethylene resin, a foamed polystyrene resin, or a like material so as not to serve as a resistance against a bend of the laminated structure 41.

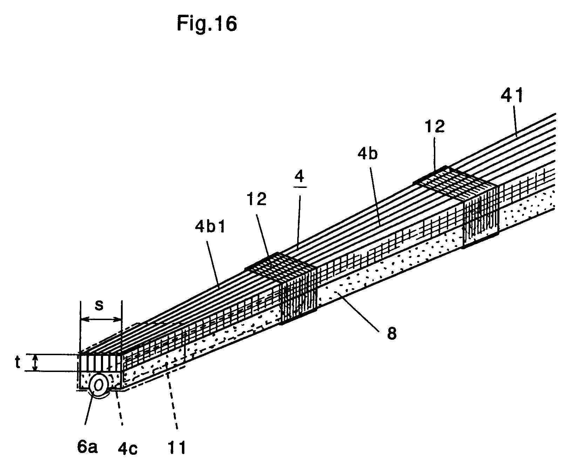

Shown in Fig. 16 is a variation 5 of the tip 4 in accordance with the second embodiment of the present invention, wherein the carbon sheets or glass fiber sheets forming laminated structure 41 are laminated horizontally or in the direction (s). When the thickness of the laminated structure 41 is equal to that in the case shown Fig. 15, the laminated structure will have a larger bending resistance than the foregoing case wherein such sheets are laminated vertically or in the direction (t).

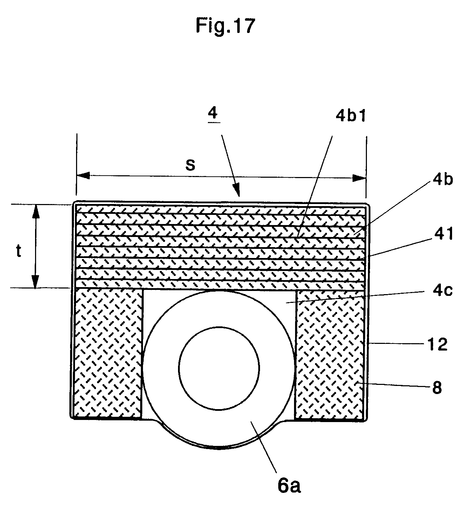

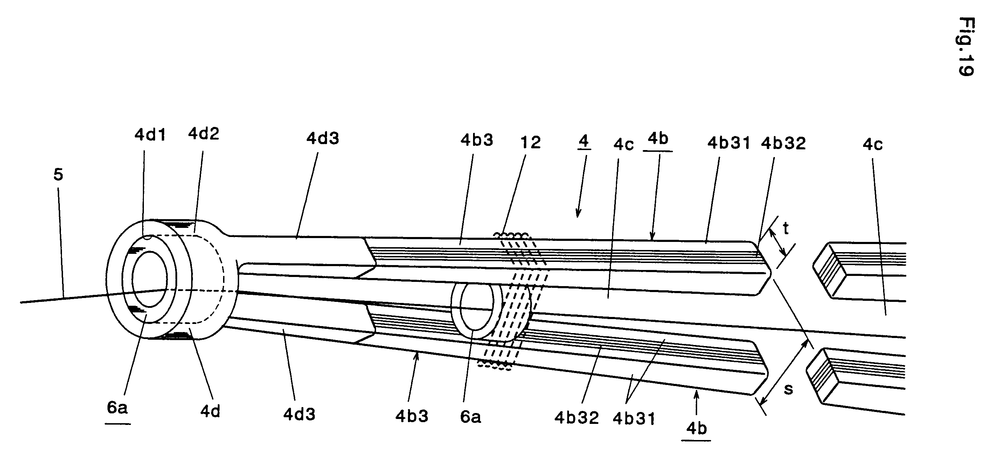

Fig. 17 is an enlarged cross-sectional view of tip 4 for showing the relationship between laminated structure 41 and soft member 8. Since the soft member 8 is easy to compress or extend in the laminating direction, it does not restrain the bending of the tip 4 and, therefore, the tip 4 is easy to bend vertically or in the direction (t). The soft member 8 may comprise two continuous members each having a rectangular cross sectional configuration which are disposed in parallel with each other on a lower surface of the laminated structure 41 as shown in Fig. 17, or may comprise a single soft member 8 affixed integrally to the lower surface of the laminated structure 41 in which the fishing line passage 4c is formed as shown in Fig. 19. Further, the corner portions of the tip 4 may be chamfered.

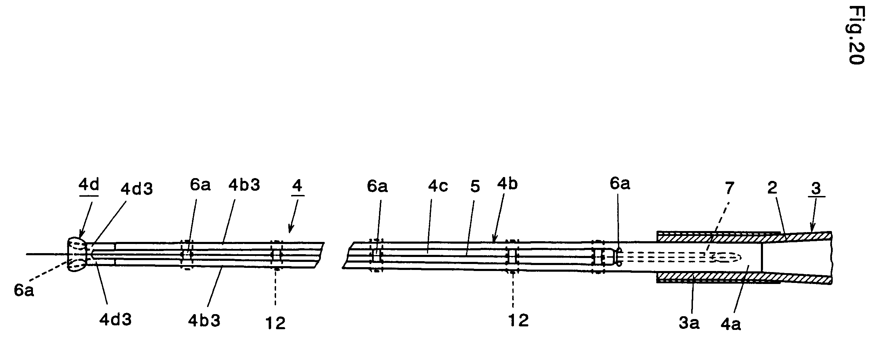

To be described next is a third embodiment of the present invention with reference to Figs. 19 through 22. In the third embodiment, a tip 4 comprises two tip-constituting rod members 4b3, inner line guides 6a each shaped like a ring, an insertion portion 4, and a top line guide portion 4d, the inner line guides 6a being inserted in a fishing line passage 4c defined between the two tip-constituting rod members 4b3 and secured thereto by winding a reinforcing/fastening member 12 therearound. This construction provides a sufficient resistance to torsion and hence, the tip will not be twisted even when a fish being hooked moves transversely with respect to fishing rod A to impose a torsional load on the tip 4.

If necessary, a tubular line guide 6a may be fitted in the top line guide portion 4d to reinforce the top end portion.

Although the tip-constituting rod members 4b3 are each rectangular in cross section as seen from Fig. 19, it is not limited to such a shape, and those having various cross sectional configurations, such as circular or elliptic or other configurations, may be employed. Further, since the tip body 4b is constructed such that a width (s) is larger than a height (t) throughout the entire length of the tip body 4b, the tip 4 is easy to bend vertically or in the direction (t) but is hard to bend horizontally or in the direction (s). Accordingly, the tip 4 remains stationary without vibrating horizontally even in a strong wind but sensitively bends vertically in response to a bite, as in the foregoing embodiments.

Referring to the structure of the tip-constituting rod members 4b3, as shown in Fig. 19, each tip-constituting rod member 4b3 comprises an intermediate layer formed of a laminated structure 4b32 of carbon fiber sheets, and glass fiber layers 4b31 sandwiching the laminated structure 4b32. It will be appreciated that each of the tip-constituting rod member 4b3 may be formed solely of the laminated structure of grass fiber sheets or carbon fiber sheets.

The top line guide portion 4d of the tip comprises a ring portion 4d2 defining a guide hole 4d1 in communication with the fishing line passage 4c, and a bifurcated guide mounting portion 4d3 projecting from behind the ring portion 4d2, the guide mounting portion 4d3 being integrally joined with the distal end of the tip-constituting members 4b3.

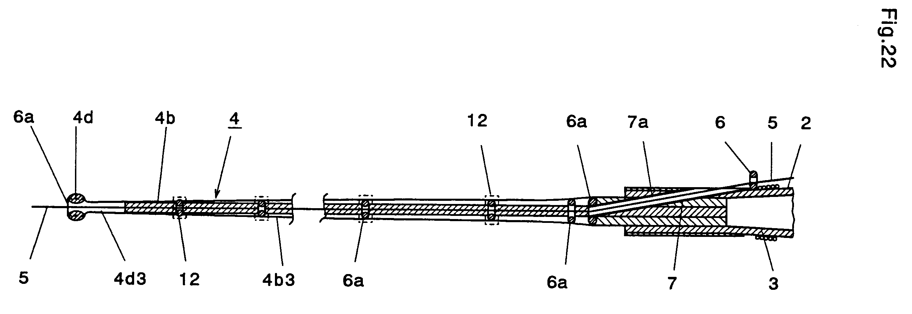

As previously mentioned, the tip 4 is used with the insertion portion 4a thereof being securely inserted into the distal end portion 3a of the tip holder piece 2. A fishing line 5 is typically introduced from the outer line guide 6 mounted on the distal end portion 3a of the tip holder piece 2 directly into the tip 4 through an opening 9 formed adjacent the insertion portion 4a of the tip 4. However, a beveled line guide hole 7 may be provided which extends through both the distal end portion of the tip holder piece 2 and the insertion portion 4a of the tip so as to allow the fishing line 5 to be introduced therein as shown in Fig. 22. In the inner periphery of the beveled line guide hole 7 is inserted a reinforcing member 7a such as a ceramic pipe or a ring for enhancing the wear resistance.

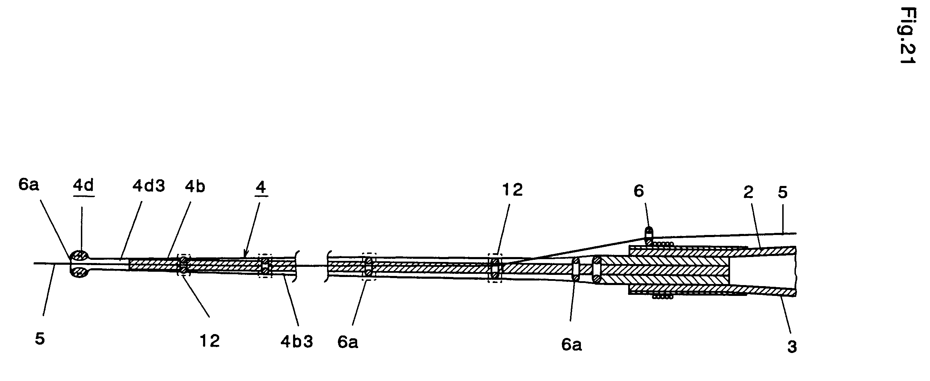

It should be noted that Figs. 21 and 22 show an example in which outer line guides 6 are attached to an upper surface of the intermediate rod section 3.

The tip 4 thus formed and attached to the distal end of the tip holder piece 2 of the intermediate rod section 3 is typically used in fishing in the following manner. The fishing line 5 unwound from a reel 10 is drawn through the outer line guides 6 and the opening 9 situated adjacent the insertion portion 4a of the tip 4 into the fishing line passage 4c. Then the line 5 is further drawn through the inner line guides 6a within the tip 4 and is drawn out of the tip top of the tip 4. Various fishing gear (not shown) such as a float, a weight, a bait basket and a fishhook are attached to the fishing line 5.

In fishing, the user throws the fishing gear into an intended point by casting or dropping and waits for a bite while scattering ground bait or operating the rod (A). Where the user wishes to move the fishing gear to another point because there is no bite or to change the bait or the fishhook, the user operates the reel to rewind the fishing line 5. Such actions are usually repeated during the fishing, but such repeated actions using the reel 10 such as a spinning reel causes the fishing line 5 to be gradually twisted, so that the fishing line becomes prone to be tangled with the top portion of the tip 4. Consequently, the fishing line 5 may be tangled with the top end portion of the tip 4 if the top end portion of the tip springs while the rod is operated. Unlike the conventional fishing rod, the tip 4 according to the present invention is of a simple configuration like a single thin flexible rod because the line guides 6a according to the present invention do not protrude at all or scarcely protrudes outwardly from the tip 4. Accordingly, the tangled fishing line 5 can be easily disentangled.

Further, since the opening 9 communicating with the fishing line passage 4c in the first embodiment and the fishing line passage 4c in the second and third embodiments are opened in an outer surface of the tip 4 (in a lower surface of the tip 4 in the embodiments shown in the drawings), water or seawater introduced into the tip 4 together with the fishing line 5 rewound by the reel 10 is immediately drained off through the opening 9 communicating with the fishing line passage 4c or through the opening of the fishing line passage 4c, and thus water will not be stored within the tip 4. Accordingly, the inside of the rod hardly becomes dirty or the fishing line 5 passing through the tip is hardly damaged by crystals of salt having acute angles which would be deposited in a conventional tip of the internal line rod.

Furthermore, washing water can be easily introduced into the tip 4 through the opening 9 or through the fishing line passage 4c by just pouring it from the above and dirty water can be easily drained off through the opening 9 or the fishing line passage 4c, whereby washing of the inside of the tip 4 can be carried out very easily.

Additionally, since the opening 9 in the first embodiment and the fishing line passage 4c in the second and third embodiments extend longitudinally in a surface of the tip body 4b and further the inner line guides 4d are fitted within the tip body 4b at appropriate positions, the fishing line 5 passing through the tip 4 mainly contacts the inner line guides 6a and scarcely contacts the fishing line passage 4c and, hence the contact resistance is very small. Accordingly, the tip can be handled in the same manner as with a conventional tip of the external line type and can be used satisfactorily in long casting.

As has been described, the tip construction in accordance with the present invention has inner line guides which do not protrude at all or scarcely protrude from the tip and thus presents a simple configuration like a single thin rod. With this tip construction, the fishing line is hardly tangled with the tip and even if tangled, it can be easily disentangled. Further, since the inner line guides and the fishing line passage or the opening for communication between the fishing line passage and the outside of the tip are provided, the tip construction of the present invention offers the advantages that the tip is highly adaptable for long casting while enjoying the advantages of an internal line type rod and that the tip allows its cleaning and maintenance to be performed very easily. Furthermore, the tip is easy to bend vertically but hard to bend horizontally and, hence it vibrates almost only in the vertical direction but hardly vibrates horizontally, thereby ensuring accurate and sensitive response to any bite.

While only certain presently preferred embodiments of the invention have been described in detail, as will be apparent with those skilled in the art that certain changes and modifications can be made in embodiments without departing from the spirit and scope of the invention as defined in the following claims.

## Claims

1. A fishing rod tip comprising:
a tip body in the form of a hollow thin rod in which a fishing line passage is defined,
inner line guides provided on an inner periphery of the tip body, and
an elongated opening formed in the tip body as extending along the length thereof for providing communication between the inside and the outside of the tip body.

2. A fishing rod tip comprising:
a main tip structure in the form of a hollow thin rod having a circular configuration in cross section taken perpendicular to the length thereof in which a fishing line passage is defined,
inner line guides provided on an inner periphery of the main tip structure,
an elongated opening formed in the main tip structure as extending along the length thereof for providing communication between the inside and the outside of the main tip structure, and
a reinforcing portion provided around the main tip structure so as not to cover at least the opening and having a greater thickness on a side opposite to the opening than on the other side having the opening.

3. A fishing rod tip comprising:
a tip body in the form of a thin rod having a height (t) smaller than a width (s) in a cross section taken perpendicular to the length thereof and defining a longitudinally extending fishing line passage depressed on one wider side thereof, and
inner line guides provided in the fishing line passage.

4. A fishing rod tip comprising:
a main tip structure in the form of a thin rod having a height (t) smaller than a width (s) in a cross section taken perpendicular to the length thereof,
a soft member formed integrally with the main tip structure on one wider side thereof and defining a fishing line passage therein, and
inner line guides provided in the fishing line passage.

5. A fishing rod tip comprising:
a pair of tip-constituting rod members extending parallel from an insertion portion to be fixedly inserted into a tip holder piece toward a tip top, and
inner line guides provided in a fishing line passage defined between the pair of tip-constituting rod members.
